# EUROPÄISCHE PATENTSCHRIFT

(11) **EP 1 644 651 B1**
(45) Veröffentlichungstag und Bekanntmachung des Hinweises auf die Patenterteilung: **14.01.2009**
(21) Anmeldenummer: 04740509.7
(22) Anmeldetag: 01.07.2004
(51) Int. Cl.: F16D 67/00

(54) **AUTOMATIKGETRIEBE MIT EINEM HYDRAULISCH BETÄTIGBAREN SCHALTGLIED**
AUTOMATIC GEARBOX WITH A HYDRAULICALLY ACTUATED SHIFTING ELEMENT
BOITE DE VITESSES AUTOMATIQUE A ELEMENT DE PASSAGE DE VITESSES A ACTIONNEMENT HYDRAULIQUE

(30) Priorität: 11.07.2003 DE 10331370
(43) Veröffentlichungstag der Anmeldung: 12.04.2006
(73) Patentinhaber: ZF FRIEDRICHSHAFEN Aktiengesellschaft, 88038 Friedrichshafen (DE)
(72) Erfinder: SCHMIDT, Thilo, 88074 Meckenbeuren (DE); POPP, Christian, 88079 Kressbronn (DE)
(86) Internationale Anmeldenummer: PCT/EP2004/007139
(87) Internationale Veröffentlichungsnummer: WO 2005/008096

(56) Entgegenhaltungen:
- DE-A- 2 538 781
- DE-A- 10 040 116
- DE-C- 738 514
- US-A- 2 353 137
- US-A- 2 763 162

## Beschreibung

Die Erfindung betrifft ein Automatgetriebe mit wenigstens einem hydraulisch betätigbaren und als Getriebebremse oder Getriebekupplung ausgebildeten Schaltglied gemäß dem Oberbegriff des Patentanspruchs 1.

Es ist bekannt, dass in Stufenautomatgetrieben mit Planetenradsatzsystemen Lamellenkupplungen und Lamellenbremsen zum Schalten der einzelnen Gangstufen verwendet werden. Zu deren Betätigung werden druckmittelbetreibbare Kolben-Zylinder-Anordnungen genutzt, deren Druckmittelversorgung über eine Steuerungs- und Regelungseinrichtung gesteuert wird.

Derartige Getriebeschaltglieder haben neben einigen Vorteilen aber den Nachteil, dass diese auch im nicht geschalteten Zustand aufgrund der Relativdrehung zwischen den Stahl- und den Belaglamellen eine vergleichsweise hohe Verlustleistung aufweisen. Diese Verlustleistung kann nur dadurch reduziert werden, indem zwischen den Stahl- und den Belaglamellen ein möglichst großer Abstand eingestellt wird, der sich zu dem sogenannten Lüftspiel aufsummiert.

Dieses notwenige Lüftspiel wird in der Regel durch eine in Öffnungsrichtung des Betätigungskolbens Schaltgliedes wirkende Rückstellfeder eingestellt. Dadurch wird jedoch der Nachteil erzeugt, dass die Kolben-Zylinder-Anordnung um die Rückstellfederkraft größer zu dimensionieren ist, und dass bei einer Beaufschlagung des Betätigungskolbens mit einem Kupplungsschließdruck zunächst der Betätigungsweg des Lüftspiels in einer Vorbefüllphase überbrückt werden muss, bevor die Lamellen in Krafteingriff gelangen. Bei typischen Automatgetrieben vergeht zur Überwindung dieses Lüftstellweges ein Zeitraum von ca. 200 ms, welcher insbesondere von Fahrern sportlicher Fahrtzeuge als lang empfunden wird. Insbesondere bei Fahrzeugen mit Automatgetrieben mit sequentiellen Schaltvorrichtungen, bei denen die Getriebegänge des Automatgetriebes manuell mittels eines Tipp-Schalters schaltbar sind, werden diese Schaltverzögerungen als Reaktionszeitverzug bemängelt.

Es wurde daher im Stand der Technik vorgeschlagen, von manuellen Vorgelegegetrieben bekannte Lamellenkupplungen mit Schaltmuffen und Synchronisierungsvorrichtungen zu nutzen, mittels derer die Lamellenkupplung im offenen Zustand sauber und schleppmomentfrei von denjenigen drehenden Getriebebauteilen freischaltbar ist, mit denen diese im zugeschaltetem zustand verbunden ist.

Dies ist zudem mit dem Vorteil verbunden, dass der Betätigungskolben dann kein Lüftspiel benötigt und auf eine Rückstellfeder verzichtet werden kann. Vorteilhafterweise tritt die vorgenannte Todzeit bei einem Übersetzungsänderungsvorgang von bis zu 200 ms dann nicht mehr auf.

Die Überwindung der Differenzdrehzahl zwischen dem drehenden Getriebebauteil und dem anzutreibenden Bauteil des Getriebeschaltgliedes beim Zuschalten desselben erfolgt zunächst mittels der Synchronisierungsvorrichtung, um daran anschließend durch eine axiale Verschiebung einer Schiebemuffe eine solche formschlüssige Verbindung zwischen den genannten Bauteilen herzustellen, dass über diese Schiebemuffe das Antriebsmoment übertragen werden kann. Nachdem der beschriebene Drehzahlausgleich hergestellt und die Schiebemuffenverbindung hergestellt wurde, erfolgt die für den Getriebeschaltvorgang übliche Gang- und Lastsynchronisierung mittels Anpressen des auf die Kupplungslamellen wirkenden Kupplungskolbens.

Vor diesem Hintergrund ist aus der gattungsgemäßen DE 100 40 116 A1 ein Getriebe bekannt, bei dem zwischen einem Innenlamellenträger einer Lamellenbremse und einem Planetenträger eines Planetenradsatzes eine Formschlusskupplung vorgesehen ist. Diese Formschlusskupplung ist bei geöffneter Lamellenbremse zur Abkopplung von Getriebebauteilen von der Lamellenbremse geöffnet, um nachteilige Schleppmomente zu reduzieren.

Liegt eine Anforderung zum Schließen der Lamellenbremse vor, wird die Formschlusskupplung von einem Axialkolben kraftfrei geschlossen, so dass die Getriebebauteile beziehungsweise der Planetenträger und die damit verbundenen Getriebebauteile an einen Innenlamellenträger der Lamellenbremse angekoppelt sind.

Anschließend wird ein Lamellenpaket der Lamellenbremse durch den Axialkolben mit einer einstellbaren Schließkraft beaufschlagt, so dass über die Druckbeaufschlagung des Axialkolbens eine weiche und kontinuierliche Steigerung des Bremsmomentes durchgeführt werden kann und kein nennenswerter Einkuppelruck auftritt.

Nachteilig bei diesem Getriebe ist jedoch, dass ein Schließen der Formschlusskupplung zwischen dem Innenlamellenträger der Lamellenbremse und dem Planetenträger des Planetenradsatzes nur bei Drehzahlgleichheit von Innenlamellenträger und Planetenträger komfortabel durchführbar ist.

Liegt dagegen zwischen dem Innenlamellenträger und dem Planetenträger eine Drehzahldifferenz vor, so ist ein Einrücken der Formschlusskupplung nicht oder nur unter hohem Kraftaufwand und gleichzeitiger hoher Geräuschentwicklung möglich.

Um den Kraftaufwand sowie eine beim Schließen der Formschlusskupplung auftretende Geräuschentwicklung zu minimieren, ist es jedoch notwendig, dass sich der Innenlamellenträger sowie der Planetenträger im Stillstand befinden, wodurch der Einsatzbereich dieses Systems deutlich eingeschränkt ist.

Darüber hinaus ist aus der nicht vorveröffentlichten DE 102 44 523 A1 ein Getriebe bekannt, mit dem die vorgenannten Nachteile vermieden werden sollen. Nach diesem Stand der Technik wird vorgeschlagen, ein Getriebe mit einer zusätzlichen Synchronisationseinrichtung auszustatten, mittels der eine Kupplungseinrichtung vor deren Schließen durch Formschluss drehzahlbezogen synchronisiert wird. Auf diese Wiese ist es möglich, dass die Kupplungseinrichtung mit geringem Kraftaufwand sowie ohne eine störende Geräuschentwicklung geschlossen werden kann.

Wenngleich das letztgenannte Getriebe einen deutlichen Fortschritt gegenüber dem erstgenannten Stand der Technik darstellt, so gibt es dennoch weiteren Verbesserungsbedarf. Nachteilig bei beiden Betätigungsanordnungen ist nämlich, dass der Betätigungskolben für die Lamellenkupplung sowohl bei einem Schließ- als auch bei einem Öffnungsvorgang einen vergleichsweise großen Stellweg absolvieren muss, was sich in einem etwas längeren Zeitraum bemerkbar macht, der zur Durchführung eines Übersetzungsänderungsvorgangs des Getriebes.benötigt wird. Dies ist vor allem dadurch bedingt, dass der Betätigungskolben zunächst den Synchronisationsweg der Synchronisationsvorrichtung überwinden muss, bevor durch weitere Kolbenbetätigung das Lammellenpaket in Schließ- oder Öffnungsrichtung belastbar beziehungsweise entlastbar ist.

Vor diesem Hintergrund ist es daher die Aufgabe an die Erfindung, ein gattungsgemäßes Automatgetriebe mit wenigstens einem als Getriebekupplung oder Getriebebremse ausgebildeten Getriebeschaltglied mit einer Synchronisationsvorrichtung vorzustellen, welches schneller als diejenigen gemäß dem Stand der Technik betätigbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass eine von der Druckbeaufschlagung der Schaltgliedlamellen unabhängige Betätigung der Synchronisationsvorrichtung eines solchen Schaltgliedes einen spürbaren Zeitgewinn bei der Durchführung eines Übersetzungsänderungsvorgangs ermöglicht.

Erfindungsgemäß verfügt daher das Fahrzeugautomatgetriebe über wenigstens ein als Getriebebremse oder Getriebekupplung ausgebildetes Schaltglied mit einem Innenlamellenträger und einem Außenlamellenträger, auf denen jeweils drehfest und axial verschieblich Innenlammelen beziehungsweise Außenlamellen derart wechselweise hintereinander angeordnet sind, dass durch diese ein Lamellenpaket gebildet ist. Einer der beiden Lamellenträger ist dabei mit relativ zueinander nichtdrehbaren oder drehbaren Getriebebauteilen verbunden, während der andere Lamellenträger über eine Synchronisationsvorrichtung mit relativ zueinander drehbaren Getriebebauteilen verbindbar ist. Zum Schließen dieses Getriebeschaltgliedes sind die Kupplungslamellen von einem Aktuator mit einer axialen Betätigungskraft beaufschlagbar. Bei diesem Getriebeschaltglied ist nun vorgesehen, dass die Synchronisationsvorrichtung mittels eines zweiten, gesonderten Aktuators betätigbar ist.

In einer vorteilhaften Ausgestaltung der Erfindung verfügt die Synchronisationsvorrichtung zudem über ein formschlüssiges Element und/oder ein kraftschlüssiges Element.

Das kraftschlüssige Element ist dabei vorzugsweise als Synchronring ausgebildet ist, der mit einem Synchronisierungsbereich an einem der beiden Lamellenträger in Wirkverbindung bringbar ist.

Hinsichtlich des formschlüssigen Elements wird bevorzug vorgesehen, dass dieses eine Schiebemuffe umfasst, die unverdrehbar aber axial verschiebbar auf einer Außenverzahnung auf dem drehbaren oder nichtdrehbaren Getriebebauteil derartig gelagert ist, dass diese nach der Herstellung der Drehzahlgleichheit zwischen dem feststehenden und dem drehbaren Getriebebauteil auf den Synchronisationsbereich des einen Lamellenträgers formschlüssig aufschiebbar ist.

Die Schiebemuffe ist zur Durchführung deren Axialbewegung von dem zweiten Aktuator betätigbar, zu dem in diesem Ausführungsbeispiel der Erfindung eine Schaltgabel einer Stellvorrichtung gehört, die in eine Umfangsnut der Schiebemuffe eingreift.

In einer anderen, besonders bauraumsparenden Ausführungsvariante der Erfindung ist vorgesehen, dass der zweite Aktuator als ein zweiter Betätigungskolben ausgebildet ist, der zusammen mit einem der Druckbeaufschlagung der Kupplungslamellen dienenden ersten Betätigungskolben in einem gemeinsamen Betätigungszylinder axial verschiebbar geführt ist. Dieser Betätigungszylinder stellt vorzugsweise für beide Betätigungskolben den gleichen Druckraum zur Verfügung, so dass beide Betätigungskolben mit dem gleichen Betätigungsdruck p_k beaufschlagbar sind. Unterschiedliche Stellkräfte ergeben sich durch unterschiedliche Druckbeaufschlagungsflächen der beiden Kolben.

Es kann aber auch vorgesehen sein, dass in dem gemeinsamen Betätigungszylinder für die beiden Betätigungskolben jeweils ein separater Druckraum ausgebildet ist, so dass die Betätigungskolben mit den gleichen oder unterschiedlichen Betätigungsdrücken von einem Druckmedium beaufschlagbar sind.

Bei der Variante mit dem nur einen Druckraum für beide Betätigungskolben ist es zur Realisierung einer gegenüber der Druckbeaufschlagung der Lamellen vorgezogenen Betätigung der Synchronisationsvorrichtung sinnvoll, wenn dem ersten Betätigungskolben eine erste Feder und dem zweiten Betätigungskolben eine zweite Feder an deren jeweiligen vom Druckraum des Betätigungszylinders fernen Stirnseite zugeordnet ist.

Diese Federn stützen sich mit ihrem jeweils anderem Ende bei Ausbildung des Schaltgliedes als Getriebebremse an einem gehäusefesten Bauteil und bei Ausbildung als Getriebekupplung an einem rotierenden Getriebebauteil ab und verfügen über unterschiedliche Federkennungen. Dabei ist die Rückstellkraft der ersten Feder größer als die Rückstellkraft der zweiten Feder, so dass bei einem auf die beiden Betätigungskolben wirkenden Betätigungsdruck p_k zuerst der erste Kolben zur Aktivierung der Synchronisationsvorrichtung und dann der zweite Kolben zur Druckbeaufschlagung der Kupplungs- oder Bremslamellen axial verschoben wird.

Hinsichtlich des formschlüssigen Elements der Synchronisationsvorrichtung kann vorgesehen sein, dass die Schiebemuffe auf einer Innenverzahnung des Innenlamellenträgers axial verschieblich geführt und über ein Verbindungselement mit dem zweiten Betätigungskolben axial verstellbar wirkverbunden ist.

In einer anderen Ausführungsform der Erfindung ist an der radial nach innen weisenden Seite eines Außenlamellenträgers ein erster Synchronisierungsbereich ausgebildet, und an der druckraumfernen Stirnseite des zweiten Betätigungskolbens eine mit dem ersten Synchronisierungsbereich zur Drehzahlsynchronisation zusammenwirkender zweiter Synchronisierungsbereich vorhanden.

Eine weitere Variante der Erfindung sieht vor, dass am Außenumfang des ersten Betätigungskolbens eine Schiebemuffe axial verschiebbar gelagert ist, die ihrerseits mit dem zweiten Betätigungskolben wirkverbunden ist. Dabei ist dieser zweite Betätigungskolben radial außerhalb der Schiebemuffe und zusammen mit dieser im gleichen Druckzylinder angeordnet wie der erste Betätigungskolben.

Diese Schiebemuffe weist an ihrem Außenumfang eine axial ausgerichtete Außenverzahnung auf, auf der ein Synchronring axial verschiebbar und drehfest angeordnet ist.

Zudem ist bei dieser Synchronisationsvorrichtung an einem am Innenumfang des Außenlamellenträgers ausgebildeten Synchronisierungsbereich ein axial ausgerichteter Verzahnungsbereich vorhanden, in den die Außenverzahnung der Schiebemuffe formschlüssig einspurbar ist.

Zur Gewährleistung einer besonderen Sicherheit dahingehend, dass die Druckbeaufschlagung der Kupplungs- oder Bremslamellen erst erfolgt, nachdem die Synchronisationsvorrichtung für eine Drehzahlgleichheit zwischen dem relativ zueinander drehenden und dem stillstehenden Getriebebauteil vorliegt, kann am Innenumfang der Schiebemuffe eine Sperrvorrichtung ausgebildet sein, die eine axiale Verschiebung des ersten Betätigungskolbens erst dann ermöglicht, wenn diese Drehzahlgleichheit erreicht sowie eine formschlüssige Verbindung zwischen der Schiebmuffe und dem Außenlamellenträger hergestellt ist.

Um für die Synchronisationsvorrichtungsbauteile sowie für die gegebenenfalls vorzusehende Sperrvorrichtung ausreichenden Bauraum und Stellweg freizuhalten, kann schließlich vorgesehen sein, dass an dem ersten Betätigungskolben ein von dem Druckraum der Kolben-Zylinder-Anordnung axial wegweisenden Vorsprung ausgebildet ist, mit dem die Innenbeziehungsweise Außenlamellen der Lamellenkupplung beziehungsweise Lamellenbremse mit der Betätigungskraft F₁ des ersten Betätigungskolbens beaufschlagbar sind.

Außerdem kann vorgesehen sein, dass anstelle eines Synchronringes eine zusätzliche kleine hydraulisch oder elektromechanisch betätigbare Lamellenkupplung zwischen dem Lamellenträger und dem drehenden oder gehäusefesten Getriebebauteil angeordnet ist.

Eine andere vorteilhafte Ausgestaltung der Erfindung sieht vor, dass eine hydrodynamische Sperrvorrichtung für den ersten Betätigungskolben vorhanden ist, die dann entsperrt wird, wenn ein Reib- und/oder Formschluss zwischen dem festzulegenden Schaltgliedbauteil und einen gehäusefesten Getriebebauteil vorliegt.

Zudem wird es als günstig angesehen, wenn durch wenigstens einen der beiden Betätigungskolben beziehungsweise durch den zweiten Aktuator ein elektrischer Schalter mechanisch betätigbar ist, mit dem ein Schmiermittelstrom ein-oder ausschaltbar ist.

Alternativ dazu ist es auch möglich, dass durch einen von dem zweiten Aktuator betätigbarer hydraulischer Schieber (hydraulisches Betätigungsmittel) ein elektrischer Schalter mechanisch betätigbar ist, mit dem ein Schmiermittelstrom ein- oder ausschaltbar ist.

Schließlich ist die Erfindung anstelle für Getriebebremsen vorteilhaft auch für Getriebebremsen nutzbar.

Zur Verdeutlichung der Erfindung ist der Beschreibung eine Zeichnung mit verschiedenen Ausführungsbeispielen beigefügt. In dieser zeigen:
- Fig. 1: einen schematischen Querschnitt durch ein Automatgetriebe im Bereich einer Lamellenbremse mit einer Betätigungsvorrichtung für die Bremslamellen sowie einer gesonderten Betätigungsvorrichtung für die Synchronisationsvorrichtung,
- Fig. 2: eine Lamellenbremse mit zwei in einem Betätigungszylinder geführten Betätigungskolben sowie mit einer Schiebemuffe,
- Fig. 3: eine Lamellenbremse mit zwei Betätigungskolben wie in Fig. 2, jedoch ohne Schiebemuffe,
- Fig. 4: eine Darstellung wie in Fig. 3, jedoch mit Schiebemuffe und Sperrvorrichtung für einen der beiden Betätigungskolben,
- Fig. 5: eine Betätigungsvorrichtung für eine Lamellenbremse wie in Fig. 4, jedoch in einem anderen Betätigungszustand,
- Fig. 6: ein Diagramm, in dem der zeitliche Verlauf von Schaltbefehlen zur Übersetzungsänderung des Getriebes, der Motordrehzahl sowie der Schaltdrücke in den zuzuschaltenden und wegzuschaltenden Schaltkupplungen dargestellt ist, sowie
- Fig. 7: eine Darstellung wie in Fig. 6, jedoch bei Betreiben der wegzuschaltenden Kupplung an deren Rutschgrenze.

Grundsätzlich ist die Erfindung sowohl an Getriebebremsen als auch an Getriebekupplungen verwirklichbar, die als Schaltglieder in einem Automatgetriebe eingesetzt werden. Bei der Vorstellung von Ausführungsbeispielen zu der Erfindung werden jedoch nur Lamellenbremsen dargestellt, da sich der Aufbau von erfindungsgemäß ausgebildeten Lamellenkupplungen von diesen Lamellenbremsen nur wenig unterscheidet. Bei diesen Lamellenbremsen rotieren der Außen- und der Innenlamellenträger bei geöffneter Kupplung bekanntermaßen mit einer Relativdrehzahl zueinander. Beim Schließen der Kupplung gleichen sich die Drehzahlen an. Die Rückstellfedern zum selbsttätigen Öffnen der Kupplung nach Abfall eines Kupplungsbetätigungsdrucks stützen sich dabei jedoch nicht an einem stehenden Getriebebauteil ab (es sei denn, es ist eine drehbare Lagerung zu einem gehäusefesten Bauteil vorhanden), sondern an entsprechenden rotierenden Bauteilen. Somit drehen die Druckkolben und die dazugehörigen Rückstellfeder mit der gleichen Drehzahl.

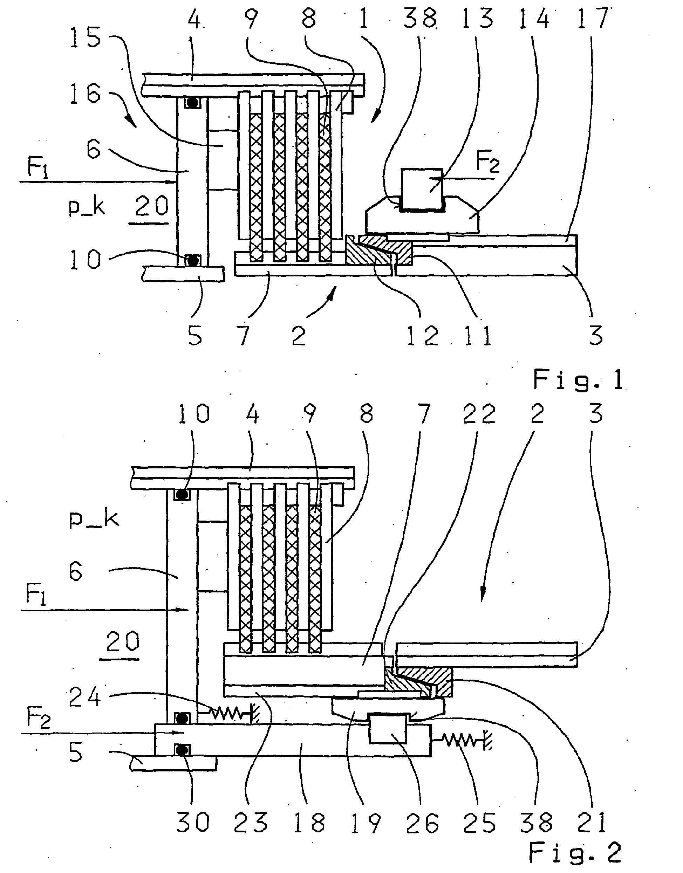

Fig. 1 zeigt nun in schematischer Form einen Ausschnitt aus einem Automatgetriebe im Bereich einer Lamellenbremse 1. Die Lamellenbremse 1 besteht im wesentlichen aus einem gegenüber einem hier nicht dargestellten Getriebegehäuse drehfest angeordneten Außenlamellenträger 4, an dem radial nach innen weisend Stahllamellen 8 axial verschiebbar jedoch drehfest angeordnet sind.

In die Zwischenräume der Außenlamellen 8 ragen radial nach außen weisend als Belaglamellen 9 ausgebildete Innenlamellen, die axialverschieblich und drehfest an einem drehbar gelagerten Innenlamellenträger 7 aufgeschoben sind. Zur Übertagung eines Bremsmomentes von dem drehbaren Innenlamellenträger 7 auf den drehfest angeordneten Außenlamellenträger 4 sind die Bremslamellen 8, 9 von einem ersten Aktuator 16 mit einer Kraft F₁ zusammenpressbar, welcher in diesem Ausführungsbeispiel von einer in der linken Hälfte der Fig. 1 dargestellten Kolben-Zylinder-Einheit erzeugt wird.

Dieser Aktuator 16 besteht im wesentlichen aus einem Druckzylinder 5 und einem darin axial verschiebbar aufgenommenen ersten Betätigungskolben 6, zwischen denen ein Druckraum 20 eingeschlossen ist. In diesem Druckraum 20 befindet sich ein hydraulisches oder pneumatisches Druckmedium, welches von einer hier nicht dargestellten Druckerzeugungsvorrichtung auf einen von einer Steuerungs- und Regelungsvorrichtung bestimmten Betätigungsdruck p_k gebracht ist. Der Druckraum 20 ist dabei vorzugsweise über einen Dichtring 10a, 10b gegen den Druckinnenraum abgedichtet.

Zudem ist in diesem Ausführungsbeispiel an der druckraumfernen Stirnseite des Betätigungskolbens 6 ein Auflagering 15 ausgebildet, der weitgehend zentral auf das Lamellenpaket 8, 9 wirkt.

Auf der rechten Bildhälfte der Fig. 1 ist ein drehbares Getriebebauteil 3 abgebildet, das über Reib- und Formschlussmittel der Synchronisationsvorrichtung 2 verfügt. Insbesondere geht es dabei um einen Synchronring 11, der auf dem Bauteil 3 gelagert ist und eine radial nach innen weisende Synchronisationsschräge aufweist, sowie um eine Schiebemuffe 14, die drehfest aber axial verschiebbar auf einer Außenverzahnung 17 des Bauteils 3 angeordnet ist. Zur Axialverschiebung der Schiebemuffe 14 wird diese von einem zweiten Aktuator 13 mit einer Verschiebekraft F₂ beaufschlagt.

Dieser zweite Aktuator 13 besteht in diesem Ausführungsbeispiel der Erfindung aus einer Schaltgabel oder einen Mitnehmer, welcher in eine Umfangsnut 38 in der Schiebemuffe 14 greift und von einer hier nicht gezeigten Stellvorrichtung betätigt wird.

Der Synchronisationsschräge des Synchronringes 11 gegenüber liegt eine radial nach innen ausgerichtete Synchronisationsschräge auf einem Synchronisationsbereich 12, der am Außenumfang des Innenlamellenträgers 7 ausgebildet ist.

Zur Betätigung der Lamellenbremse 1 wird dem Grundgedanken der Erfindung folgend zuerst die Schiebemuffe 14 durch den zweiten Aktuator 13 mit einer Betätigungskraft F₂ nach links in Richtung zu dem Kupplungslamellenpaket 8, 9 verschoben, so dass der Synchronring 11 mit seiner Synchronisationsschräge gegen die Synchronisationsschräge des Synchronisationsbereiches 12 am Innenlamellenträger 7 läuft.

Dadurch wird in an sich bekannter Weise der Innenlamellenträger 7 auf die Drehzahl des drehenden Bauteils 3 gebracht, so dass eine reibschlüssige Verbindung zwischen dem Innenlamellenträger 7 und der Bauteil 3 geschaffen ist.

Danach wird die Schiebemuffe 14 axial so weit in Richtung zum Lamellenpaket 8, 9 geschoben, bis deren Innenverzahnung in eine Außenverzahnung am Synchronisierungsbereich 12 des Innenlamellenträgers 7 formschlüssig einspurt.

Sobald diese formschlüssige Verbindung hergestellt ist, wird in dem Betätigungszylinder der Druck p_k soweit erhöht, dass sich der erste Betätigungskolben 6 nach rechts auf das Lamellenpaket 8, 9 zu bewegt und dieses mit der gewünschten Betätigungskraft F₁ beaufschlagt. Dadurch werden die Außenlamellen 8 gegen die Innenlamellen 9 gedrückt, so dass sich deren Drehzahl ebenso wie die Drehzahl des Innenlamellenträgers und des mit diesem formschlüssig verbundenen Bauteils 3 auf den Wert Null reduziert.

Zudem kann der erste Betätigungskolben 6 im nicht geschalteten Zustand mit sehr geringem Spiel 29 an die Bremslamellen 8, 9 angelegt werden, da durch die Abkopplung des Innenlamellenträgers 7 von dem drehenden Bauteil 3 keine Schleppverluste zwischen den Außenlamellen 8 und den Innenlamellen 9 zu verzeichnen sind.

Fig. 2 verdeutlicht am Beispiel einer Getriebebremse, dass sich das durch die Erfindung beschriebene Prinzip auch in eine andere konstruktive Ausführungsform umsetzen lässt. Bei dieser Variante ist in dem Betätigungszylinder 5 neben dem ersten Betätigungskolben 6 ein zweiter Betätigungskolben 18 angeordnet, die beide vorzugsweise von dem gleichen im Druckraum 20 des Betätigungszylinders 5 herrschenden Betätigungsdruck p_k beaufschlagbar sind. Beide Kolben 6, 18 sind gegeneinander und gegenüber dem Zylinder 5 über Dichtungen 10, 30 gegen den nicht näher bezeichneten Druckinnenraum abgedichtet.

In Abhängigkeit von der dem Druckraum 20 entgegengerichteten Kolbenfläche stellen sich Betätigungskräfte F₁ und F₂ ein, die unterschiedlich oder gleichgroß sein können.

Gegen die von dem Druckraum 20 des Betätigungszylinders 5 wegweisenden Stirnseiten der beiden Betätigungskolben 6, 18 wirken Rückstellfedern 24 und 25, die sich mit ihrem anderen Ende an getriebegehäusefeste Bauteile abstützen. Diese beiden Federn 24, 25 haben die Aufgabe, die beiden Betätigungskolben mit Rückstellkräften zu beaufschlagen, die im Zusammenwirken mit den auf die Betätigungskolben 6, 18 wirkenden Betätigungskräfte F₁ und F₂ dafür sorgen, dass bei gleichem Betätigungsdruck p_k in der Druckkammer 20 zuerst der kleinere zweite Betätigungskolben 18 zur Durchführung der Drehzahlsynchronisation betätigt wird, bevor der größere erste Betätigungskolben 6 auf das Lamellenpaket 8, 9 einwirkt.

In dem hier gewählten Ausführungsbeispiel sind die Kolbenflächen derart gewählt, dass die an dem ersten Betätigungskolben 6 angreifende erste Feder 24 eine größere Rückstellkraft erzeugt als die an den zweiten Betätigungskolben 18 angreifende zweite Feder 25. In einem Ausführungsbeispiel beträgt die Rückstellkraft der ersten Feder 24 einem Ansteuerdruckäquivalent von 1 Bar, während dasjenige der zweiten, an den Betätigungskolben 18 für die Synchronisationsvorrichtung 2 angreifende Feder 0.5 Bar beträgt.

Wie Fig. 2 deutlich zeigt, ist am druckraumfernen Ende des zweiten Betätigungskolbens 18 ein in eine Umfangsnut 38 einer Schiebemuffe 19 greifendes Verbindungselement 26 angeordnet, mittels dem eine Schiebemuffe 19 durch eine Axialbewegung des zweiten Betätigungskolbens 18 verschiebbar ist.

Die Schiebemuffe 19 ist in diesem Ausführungsbeispiel der Erfindung so angeordnet, dass diese mit deren Außenverzahnung auf einer Irinenverzahnung 23 des Innenlamellenträgers 7 axial verschiebbar ist.

Im Bereich des druckraumfernen Endes des Innenlamellenträgers 7 ist auch hier ein Synchronring 22 angeordnet, der von der Schiebemuffe 19 in Richtung zu einem Synchronisationsbereich 21 des drehenden Bauteils 3 verschiebbar ist.

Zur Betätigung der beschriebenen Synchronisationsvorrichtung 2 wird ein Druck p_k in dem Druckraum 20 des Druckzylinders 5 aufgebaut, der ausreichend groß ist, um den zweiten Kolben 18 gegen die Rückstellkraft der zweiten Rückstellfeder 25 aus dem Druckzylinder 5 herauszuschieben. Dadurch werden die Synchronisationsflächen des Synchronringes 22 und des Synchronbereiches 21 gegeneinander gepresst, wodurch das drehende Bauteil 3 bis zum Stillstand abgebremst wird. Anschließend wird die Schiebemuffe 19 zur Herstellung einer formschlüssigen Verbindung zwischen dem Innenlamellenträger 7 und dem Bauteil 3 auf letzteres aufgeschoben.

Erst nach Herstellung dieser formschlüssigen Verbindung wird der Druck p_k in dem Druckraum 20 soweit erhöht, dass der erste Betätigungskolben 6 gegen die Kraft der ersten Rückstellfeder 24 aus dem Betätigungszylinder 5 heraus geschoben und gegen das Lamellenpaket 8, 9 gedrückt wird.

Vorzugsweise sind die Kolbenflächen der beiden Betätigungskolben 6, 18 sowie die Rückstellkräfte der beiden Federn 24, 25 derartig gewählt, dass auf beide Betätigungskolben der gleiche Betätigungsdruck p_k wirkt.

Dabei wird es als vorteilhaft bewertet, wenn bei der Betätigungsbewegung des zweiten Kolbens 18 zur Durchführung der reibschlüssigen- und formschlüssigen Verbindung zwischen den genannten Bauteilen bereits auch der erste Betätigungskolben 6 axial gering auf das Lamellenpaket 8, 9 zu bewegt wird, so dass sich die Todzeit zum Schließen der Kupplung noch weiter reduziert.

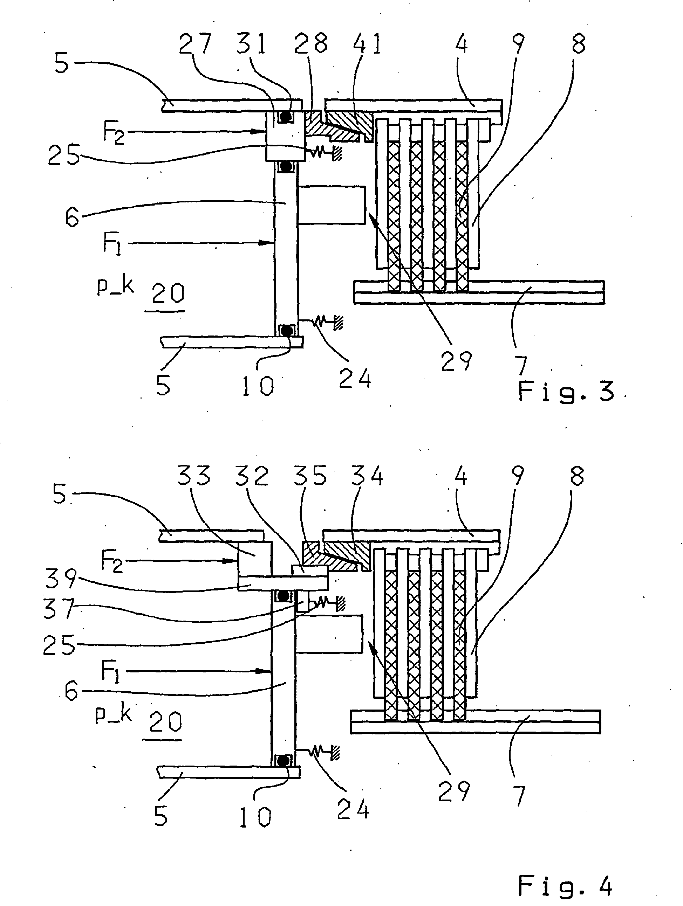

Ein anderes, eine Getriebebremse betreffendes Ausführungsbeispiel der Erfindung ist in Fig. 3 dargestellt, bei dem auf eine formschlüssige Verbindung zwischen einem drehenden und einem nichtdrehenden Bauteil verzichtet wird. Bei dieser Lamellenbremse bildet der Innenlamellenträger 7 das drehende Bauteil, welches aufgrund einer fehlenden mechanischen beziehungsweise viskosen Trennung zwischen deren Innenlamellen 9 und den auf dem Außenlamellenträger 4 angeordneten Außenlamellen 8 Schleppverluste erzeugt, durch die letztlich der Außenlamellenträger 4 mit der gleichen Drehzahl um ein hier nicht dargestelltes Drehzentrum dreht, wie der Innenlamellenträger 7.

Bei dieser Getriebevariante ist der zweite Betätigungskolben 27 am radial äußeren Umfang des ersten Betätigungskolbens 6 axialverschieblich im Betätigungszylinder 5 angeordnet und mittels einer Dichtung 31 an diesem abgedichtet.

Der Außenlamellenträger 4 verfügt in diesem Ausführungsbeispiel an seinem druckraumnahen Ende über einen Synchronisationsbereich 41 mit einer radial nach innen weisenden Synchronisationsschräge, gegen die eine radial nach außen weisende Synchronisationsschräge eines Synchronringes 28 pressbar ist. Dazu wird der zweite Betätigungskolben 27 mittels des in dem Druckraum 20 herrschenden Drucks p_k und gegen die Rückstellkraft der zweiten Rückstellfeder 25 mit einer Betätigungskraft F₂ auf den Synchronisationsbereich 41 des Außenlamellenträgers 4 gedrückt, bis dieser aufgrund der dabei auftretenden Reibung vollständig abgebremst ist.

Der nun folgende Zeitraum, in dem Schleppverluste zwischen dem stillstehenden Außenlamellenträger 4 und dem drehenden Innenlamellenträger 7 auftreten können ist vergleichsweise klein, da der erste Betätigungskolben 6 aufgrund des sehr kleinen Spiels 29 nur noch einen geringen Stellweg zu überwinden hat, bis dieser auf das Lamellenpaket 8, 9 einwirkt.

Sodann hat sich der erste Betätigungskolben 6 in Überwindung der auf diesen entgegen zur Schließbewegung des Kolbens 6 wirkenden Rückstellkraft der zweiten Feder 24 sich soweit dem Lamellenpaket 8, 9 genähert, dass die Außenlamellen 8 gegen die Innenlamellen 9 derartig mit einer Kraft F₁ gepresst werden, dass auch der Innenlamellenträger 7 bis zum Stillstand abgebremst wird. Auch hier ist vorgesehen, dass die Rückstellkraft der an den zweiten Betätigungskolben 27 angreifenden zweiten Rückstellfeder 25 kleiner ist als die Rückstellkraft der an den ersten Betätigungskolben drückenden ersten Rückstellfeder 24.

Eine Abwandlung der gerade erläuterten Lamellenbremse samt zugehöriger Betätigungs- und Synchronisationsvorrichtung ist in Fig. 4 dargestellt. Bei dieser ist jedoch zusätzlich eine Schiebemuffe 39 zwischen dem ersten Betätigungskolben 6 und dem zweiten Betätigungskolben 33 angeordnet, wobei die Schiebemuffe 39 mit dem zweiten Betätigungskolben 33 derartig wirkverbunden ist, dass diese von dem Kolben 33 axial verschiebbar ist. Im einfachsten Fall ist die Schiebemuffe 39 integraler Bestandteil des zweiten Betätigungskolbens 33, was jedoch eine sehr feinsinnige Betätigungssteuerung voraussetzt.

Die Schiebemuffe 39 ist nun so ausgebildet, dass an deren äußeren Umfang eine Außenverzahnung (Mitnahmeverzahnung) 32 ausgebildet ist, auf der ein Synchronring 35 gelagert ist. Dieser Synchronring 35 verfügt über eine radial nach außen weisende Synchronisationsschräge, die gegen eine radial nach innen weisende Synchronisationsschräge pressbar ist, welche an einem Synchronisationsbereich 34 am druckraumnahen Ende am Innenumfang des Außenlamellenträgers 4 ausgebildet ist.

Darüber hinaus ist an dem radial an weitesten nach innen weisenden Ende des Synchronisationsbereiches 34 des Außenlamellenträgers 4 eine Innenverzahnung 36 ausgebildet, in die die Außenverzahnung 32 der Schiebemuffe 39 nach Herstellung der reibschlüssigen Verbindung zwischen dem Außenlamellenträger 4 und dem Gehäuse 5 zur formschlüssigen Verbindung zwischen den genannten Getriebebauteilen einspurbar ist.

Auch hier helfen eine erste Rückstellfeder 24 an dem ersten Betätigungskolben 6 und eine zweite Rückstellfeder 25 dabei, dass zuerst der Außenlamellenträger 4 bis zum Stillstand abgebremst und formschlüssig mit den nichtdrehenden Bauteilen 5, 33, 35, 39 verbunden wird, bevor der erste Betätigungskolben 6 mit einer Kraft F₁ gegen das Lamellenpaket 8, 9 drückbar ist.

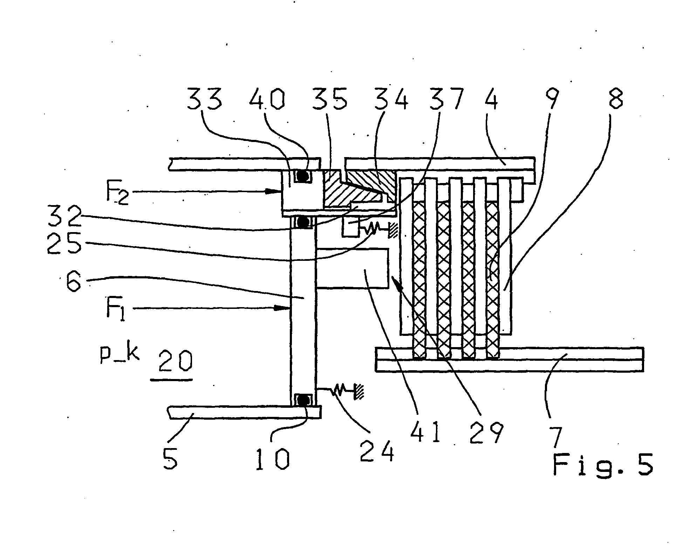

Wie Fig. 4 und Fig. 5 zeigen, greift die zweite Rückstellfeder 25 mit ihrem druckraumnahen Ende an einer Sperrvorrichtung 37 für den ersten Betätigungskolben 6 an, die an dem radial nach innen weisenden Umfang der Schiebemuffe 39 befestigt oder ausgebildet ist.

Vor allem Fig. 5 verdeutlicht den Zustand, in dem bereits eine formschlüssige Verbindung zwischen der Schiebemuffe 39 und der Innenverzahnung 36 an dem Synchronisationsbereich 34 des Innenlamellenträger 4 hergestellt ist. Dazu ist diese Schiebemuffe 39 soweit axial nach rechts bewegt worden, dass ein das Spiel 29 zwischen dem Betätigungsvorsprung 41 an dem ersten Betätigungskolben 6 und dem Lamellenpaket 8, 9 überwindender Stellweg des ersten Betätigungskolbens 6 freigegeben ist.

Wie insbesondere ein Vergleich mit der in Fig. 4 dargestellten Situation vor der Herstellung des Formschlusses zeigt, konnte zu diesem Zeitpunkt der erste Betätigungskolben 6 nur unter Mitnahme der Schiebemuffe 39 axial in Richtung zu den Kupplungslamellen 8, 9 verstellt werden.

In weiterer Ausgestaltung der Erfindung kann vorgesehen sein, dass die Schiebemuffen anstelle der bisher vorgestellten hydraulischen Betätigung auch elektromechanisch betätigbar sind.

Zudem kann es vorteilhaft sein, die Stellposition der beiden Betätigungskolben oder der Schiebemuffe mittels Sensoren zu erfassen und einem Steuerungs- und Regelungsgerät zur Steuerung eben dieser Stellmittel zuzuführen.

Ebenso ist die Anordnung einer hydrodynamischen Sperrvorrichtung möglich, die bei nicht erreichter Schiebemuffenendposition sperrt und erst dann entriegelt wird, wenn ein Reib- und/oder Formschluss zwischen den beteiligten Schaltgliedbauteilen vorliegt.

Eine andere Variante der Erfindung sieht vor, dass anstelle der beschriebenen Synchronringe zusätzliche kleine hydraulisch oder elektromechanisch betätigbare Lamellenkupplungen genutzt werden, die zwischen dem Lamellenträger und dem drehenden oder gehäusefesten Getriebebauteil angeordnet sind.

Die Erläuterungen zu der Erfindung und deren unterschiedlichen Ausführungsformen verdeutlichen, dass erfindungsgemäß ausgebildeten Lamellenbremsen und Lamellenkupplungen beziehungsweise deren Betätigungs- und Synchronisationsvorrichtungen einige Vorzüge aufweisen. So hat ein solches Getriebeschaltglied im nicht geschalteten Zustand keine Reibungs- oder Schleppverluste, und die Todzeit zwischen der Auslösung des Schaltgliedschließbefehls und dem tatsächlichen Schließen der Kupplung oder Bremse kann wegen der schnellen axialen Verschiebbarkeit des zweiten Betätigungskolbens sowie des gegen Null gehenden Lüftspiels stark verringert werden.

Darüber hinaus kann durch einen Verzicht auf eine sonst übliche Rückstell-Tellerfeder für den nach dem Stand der Technik einzigen Betätigungskolben davon ausgegangen werden, dass kleinere Toleranzen bei der einstellbaren Kupplungskraft entstehen.

Die Nutzung von zwei Betätigungskolben bringt zudem den Vorteil mit sich, dass wegen kleinerer Einzelkolben deren Stellwegauflösung verbessert ist und der Kupplungsdruck vollständig für die Kupplungsbetätigung zur Verfügung steht.

Ein weiter Vorteil besteht darin, dass durch die Abkopplung der Kupplungs- beziehungsweise Bremslamellen im nicht geschalteten Zustand in dieser Betriebsphase an sich keine Schmierölversorgung des Schaltgliedes notwendig ist, wodurch in derartigen Zeiträumen eine diesbezügliche Pumpleistung einer Schmierölpumpe eingespart werden kann.

Das Ein- und Ausschalten dieses Schmiermittelstromes kann beispielsweise durch einen der beiden Betätigungskolben 18, 27, 33 beziehungsweise vom zweiten Aktuator 13 derart erfolgen, dass bei deren Stellbewegung ein mechanisch betätigbarer elektrischer Schalter betätigt wird.

Außerdem ist hinsichtlich der Kupplungs- bzw. Bremsbetätigung eine Erhöhung der Betriessicherheit festzustellen, da insgesamt zwei Betätigungsmittel für jedes Schaltglied vorgesehen sind.

Schließlich wird die Gefahr von Überdrehzahlfehlern durch die Nutzung der Erfindung reduziert, da nicht geschaltete Kupplungen oder Bremsen auch nicht durch einen Hochschleppvorgang auf Drehzahl gebracht werden müssen. Zudem sind Getriebekupplungen und -bremsen nur dann mit den erfindungsgemäßen Betätigungs- und Synchronisationsmittels auszustatten, wenn diese sonst voraussichtlich mit hohen Schleppverlusten betrieben werden müssten.

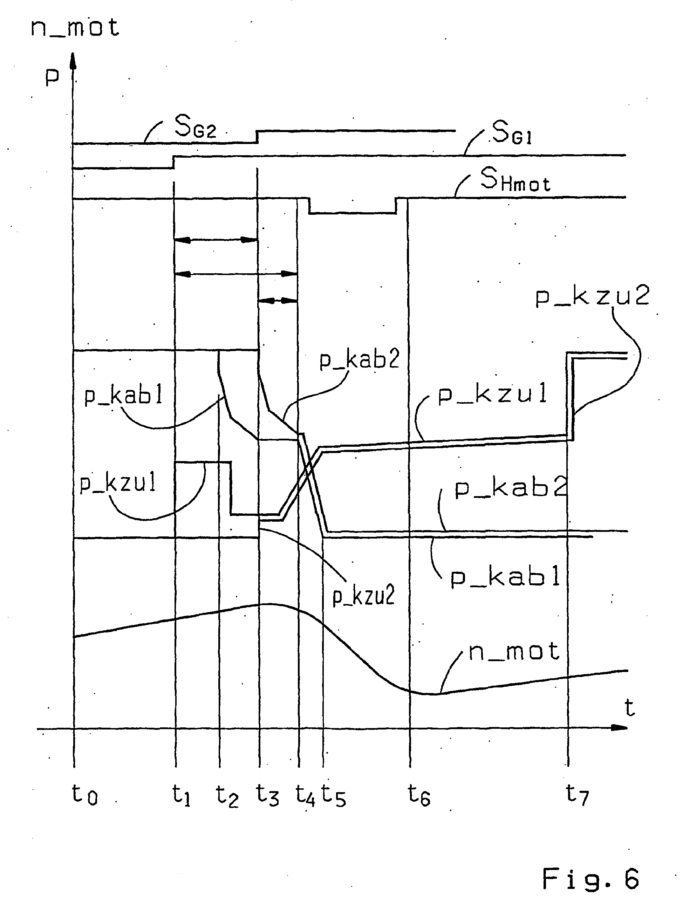

Nachfolgend wird anhand von Fig. 6 ein Schaltablauf eines erfindungsgemäß ausgebildeten Getriebes bei einer zughochschaltung erläutert.

In diese Abbildung sind der zeitliche Verlauf der Motordrehzahl n_mot und die Schaltdrücke p_kzul, p_kab1 in dem Druckraum 20 des oben beschriebenen Druckzylinders 5 für ein zuzuschaltendes Schaltglied und eine wegzuschaltende Kupplung mit einer Betätigungsvorrichtung nach dem Stand der Technik abgebildet. Im Vergleich dazu sind auch die Betätigungsdrücke p_kab2, p_kzu2 einer zuzuschaltende Kupplung und einer wegzuschaltende Kupplung einer Synchronisations- und Betätigungsvorrichtung gemäß der Erfindung dargestellt. Darüber hinaus zeigt diese Fig. 5 in deren oberen Bereich den zeitlichen Verlauf eines Steuerungssignals S_{Mmot} zur Veränderung des Motordrehmoments sowie zwei Schaltsignale S_{G1}, S_{G2} zur Durchführung des Hochschaltvorgangs.

Ausgehend von einem normalen Fahrzeugfahrbetrieb ohne Schaltvorgang im Zeitpunkt t₀ erfolgt bei einem konventionellen Getriebe im Zeitpunkt t₁, ausgelöst von einem Getriebesteuerungsgerät und/oder einem Betätigungsbefehl des Fahrzeugführers, zunächst eine Vorbefüllung des Betätigungszylinders 5 der zuzuschaltenden Kupplung derart, dass der Ansteuerdruck p_kzu1 für diesen Betätigungszylinder wie in Fig. 6 dargestellt ansteigt.

Kurz darauf wird im Zeitpunkt t₂ der Betätigungsdruck p_kab1 in der wegzuschaltenden Kupplung reduziert, während der Vorbefülldruck der zuzuschaltenden Kupplung nach dem Anliegen dessen Betätigungskolbens an dem Kupplungslamellenpaket wieder abfällt.

Kurz vor Erreichen des Zeitpunktes t₄ wird der Ansteuerdruck p_kzu1 zur Druckbeaufschlagung der Kupplungslamellen erhöht und im wesentlichen gleichzeitig der Betätigungsdruck in dem Aktuator der wegzuschaltenden Kupplung im Sinne einer gleitenden Drehmomentübergabe weiter derart reduziert, dass zum Zeitpunkt t₅ die wegzuschaltende Kupplung aus dem Drehmomentübertragungsweg im Getriebe vollständig herausgenommen sowie die zuzuschaltende Kupplung soweit zugeschaltet ist, dass ein Reibschluss zwischen deren Kupplungslamellen hergestellt ist.

In diesem Zusammenhang sei darauf hingewiesen, dass kurz nach dem Zeitpunkt t₄ durch ein entsprechendes Steuerungssignal S_{Mmot} der Antriebsmotor der Fahrzeuges zu einer kurzzeitigen Reduzierung des von diesem erzeugten Drehmoments veranlasst wird. Diese Drehmomentreduzierung wird nach der Drehmomentübergabe von der wegzuschaltenden Kupplung zur zuzuschaltenden Kupplung kurz vor Erreichen des Zeitpunktes t₆ wieder rückgängig gemacht.

Im Zeitpunkt t₇ wird der Druck im Aktuator der zuzuschaltenden Kupplung schließlich soweit erhöht, dass das vom Motor maximal bereitstellbare Drehmoment'vollständig übertragen werden kann, beziehungsweise der Druck in Abhängigkeit des Getriebeeingangsmomentes nachgeführt wird, um eine Übertragung des Drehmomentes sicherzustellen.

Im Unterschied zu diesem an sich bekannten Schaltablauf zeigt der Druckverlauf am zuzuschaltenden und wegzuschaltendem Schaltglied des erfindungsgemäßen Automatgetriebes ein davon abweichendes zeitliches Verhalten. Tatsächlich entfällt durch die erfindungsgemäße Kombination der ersten Betätigungsvorrichtung für die Kupplungsbetätigung mit der Synchronisationsvorrichtung und der dieser zugeordneten zweiten Betätigungsvorrichtung die oben beschriebene Vorbefüllphase an dem Betätigungszylinder der zuzuschaltenden Kupplung.

Da das Lüftspiel bei der erfindungsgemäßen Lamellenkupplung auf einen Wert nahe Null reduziert ist, kann unmittelbar nach der Abgabe des Schaltbefehls S_{G2} im Zeitpunkt t₃ der Betätigungsdruck p_kzu2 im Stellmittel der zuzuschaltenden Kupplung auf das Niveau kurz vor der ersten Drehmomentübergabe angehoben und der Schaltdruck p_kab2 im Stellmittel der wegzuschaltenden Kupplung reduziert werden. Die anschließende Drehmomentübergabe erfolgt dann wie oben beschrieben im wesentlichen zwischen den Zeitpunkten t₄ und t₅, während die weitere Druckanhebung an der zuzuschaltenden Kupplung zum Zeitpunkt t₇ stattfindet.

Fig. 6 ist deutlich entnehmbar, dass zwischen den beide Zeitpunkten t₁ und t₃ der mit dem oberen Doppelpfeil gekennzeichnete Vorbefüllzeitraum für die zuzuschaltende Kupplung (Duckverlauf p_kzul) sowie der erste Druckreduzierungsabschnitt (Duckverlauf p_kab1) für die wegzuschaltende Kupplung gemäß dem Stand der Technik liegt. Genau um diesen Zeitraum reagiert das erfindungsgemäß ausgebildete und betriebene Getriebe schneller auf einen Übersetzungsänderungswunsch.

Wie insbesondere ein Vergleich der Schaltdruckverläufe (p_kzul, p_kab1) gemäß dem Stand der Technik in den Zeiträumen t₁ bis t₄ (mittlerer Doppelpfeil) mit den Schaltdruckverläufen (p_kzu2, p_kab2) gemäß der Erfindung.in dem Zeitraum t₃ bis t₄ (unterer Doppelpfeil) verdeutlicht, kann gemäß der Erfindung durch den bereits in optimaler Betätigungsposition befindlichen Betätigungskolben die Kupplungsbetätigung und damit auch der Übersetzungsänderungsvorgang vorteilhaft schnell durchgeführt werden.

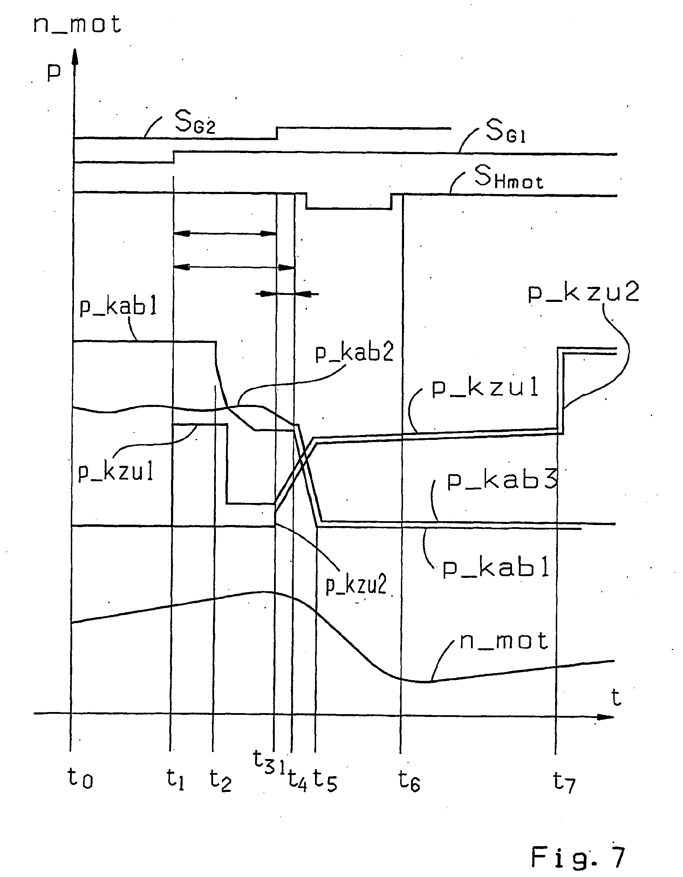

Eine weitere Reduzierung der Reaktionszeit des Getriebes auf einen Übersetzungsänderungsbefehl gemäß der Darstellung in Fig. 7 dadurch erreicht werden, dass die abzuschaltende Kupplung ständig an deren Rutschgrenze betrieben wird. Der dazu notwenige Betätigungsdruck p_kab3 ist deutlich niedriger als der Druck p_kab2 gemäß dem in Fig. 6 gezeigten Ausführungsbeispiel, so dass die Restdruckabsenkung im Aktuator der wegzuschaltenden Kupplung beginnend im Zeitpunkt t₃₁ bis zum Beginn der Drehmomentübergabe zum Zeitpunkt t4 deutlich geringer ausfällt als bei dem vorgenannten Beispiel.

### Bezugszeichen

- 11: Getriebeschaltglied
- 12: Synchronisationsvorrichtung
- 13: Drehbares Getriebebauteil
- 14: Außenlamellenträger
- 15: Zylinder
- 16: Betätigungskolben
- 17: Innenlamellenträger
- 18: Außenlamellen
- 19: Innenlamellen
- 10a: Dichtung
- 10b: Dichtung
- 11: Synchronring
- 12: Synchronisationsbereich
- 13: Zweiter Aktuator
- 14: Schiebemuffe
- 15: Auflagering des Betätigungskolbens
- 16: Erster Aktuator
- 17: Außenverzahnung
- 18: Zweiter Betätigungskolben
- 19: Schiebemuffe
- 20: Druckraum der Kolben-Zylinder-Einheit
- 21: Verbindungselement
- 22: Synchronring
- 23: Innenverzahnung
- 24: Erste Feder
- 25: Zweite Feder
- 26: Synchronisierungsbereich
- 27: Zweiter Kolben
- 28: Synchronisierungsbereich
- 29: Axialspiel
- 30: Dichtung
- 31: Dichtung
- 32: Außenverzahnung
- 33: Zweiter Kolben
- 34: Synchronisierungsbereich
- 35: Synchronring
- 36: Innenverzahnung auf Synchronisationsbereich 34
- 37: Sperrvorrichtung für den ersten Kolben 6
- 38: Umfangsnut an der Schiebemuffe
- 39: Schiebemuffe
- 40: Dichtung
- 41: Vorsprung
- F₁: Betätigungskraft
- F₂: Betätigungskraft
- S_{Mmot}: Steuerungssignal zur Veränderung des Motormoments
- Not: Motordrehzahl
- S_{G1}: Schaltsignal zur Durchführung eines Übersetzungsänderungsvorgangs (Gemäß Stand der Technik)
- S_{G2}: Schaltsignal zur Durchführung eines Übersetzungsänderungsvorgangs (gemäß der Erfindung)
- p_k: Betätigungsdruck
- p_kzu1: Zuschaltdruck im zuzuschaltenden Schaltelement gemäß dem Stand der Technik
- p_kazu2: Zuschaltdruck im zuzuschaltenden Schaltelement gemäß der Erfindung
- p_kab1: Abschaltdruck im abzuschaltenden Schaltelement gemäß dem Stand der Technik
- p_kab2: Abschaltdruck im abzuschaltenden Schaltelement gemäß der Erfindung
- p_kab3: Abschaltdruck im abzuschaltenden Schaltelement gemäß einer Variante der Erfindung
- t: Zeit
- t₀ - t₇: Zeitpunkte
- t₃₁: Zeitpunkt

## Patentansprüche

1. Automatgetriebe für ein Fahrzeug, mit wenigstens einem hydraulisch betätigbaren und als Getriebebremse oder Getriebekupplung ausgebildetem Schaltglied (1), welches über einen Innenlamellenträger (7) und einen Außenlamellenträger (4) verfügt, auf denen drehfest und axial verschieblich Innenlammelen (9) beziehungsweise Außenlamellen (8) angeordnet sind, die wechselweise hintereinander angeordnet ein Lamellenpaket bildend von einem Aktuator (16) zum Schließen des Schaltgliedes (1) mit einer axialen Betätigungskraft (F₁) beaufschlagbar sind, und bei dem ein Lamellenträger (4) mit nichtdrehbaren oder drehbaren Getriebebauteilen verbunden sowie der andere Lamellenträger (7) über eine Synchronisationsvorrichtung (2) mit drehbaren Getriebebauteilen (3) verbindbar ist,
**dadurch gekennzeichnet,**
**dass** die Synchronisationsvorrichtung (2) mittels eines zweiten Aktuators (13, 18, 27, 33) betätigbar ist.

2. Automatgetriebe nach Anspruch 1, **dadurch gekennzeichnet, dass** die Synchronisationsvorrichtung (2) ein formschlüssiges Element und/oder ein kraftschlüssiges Element umfasst.

3. Automatgetriebe nach Anspruch 2, **dadurch gekennzeichnet, dass** das kraftschlüssige Element als Synchronring (11) ausgebildet ist, der mit einem Synchronisierungsbereich (12) an einem der beiden Lamellenträger (4) in Wirkverbindung bringbar ist.

4. Automatgetriebe nach wenigstens einem der Ansprüche 1 bis 3, **dadurch gekennzeichnet, dass** das formschlüssige Element als Schiebemuffe (14) ausgebildet ist, die unverdrehbar aber axial verschiebbar auf einer Außenverzahnung (17) auf dem drehbaren oder nichtdrehbaren Getriebebauteil (3) derartig gelagert ist, dass diese nach Herstellung der Drehzahlgleichheit zwischen dem feststehenden und dem drehbaren Getriebebauteil (3) auf den Synchronisationsbereich (12) des Lamellenträger (7) formschlüssig aufschiebbar ist.

5. Automatgetriebe nach wenigstens einem der Ansprüche 1 bis 4, **dadurch gekennzeichnet, dass** die Schiebemuffe (14) von dem zweiten Aktuator (13) betätigbar ist.

6. Automatgetriebe nach Anspruch 4, **dadurch gekennzeichnet, dass** der zweite Aktuator (13) als Schaltgabel einer Stellvorrichtung ausgebildet ist, die in eine Umfangsnut (38) der Schiebemuffe (14) eingreift.

7. Automatgetriebe nach Anspruch 5, **dadurch gekennzeichnet, dass** der zweite Aktuator als ein zweiter Betätigungskolben (18) ausgebildet ist, der zusammen mit einem der Druckbeaufschlagung der Kupplungslamellen (8, 9) dienenden ersten Betätigungskolben (6) in einem gemeinsamen Betätigungszylinder (5) axial beweglich geführt ist.

8. Automatgetriebe nach Anspruch 7, **dadurch gekennzeichnet, dass** in dem gemeinsamen Betätigungszylinder (5) für die beiden Betätigungskolben (6, 18, 27, 33) ein gemeinsamer Druckraum (20) oder jeweils ein separater Druckraum für jeden der Betätigungskolben ausgebildet ist.

9. Automatgetriebe nach Anspruch 8, **dadurch gekennzeichnet, dass** beide Betätigungskolben mit den gleichen oder unterschiedlichen Betätigungsdrücken (p_k) beaufschlagbar sind.

10. Automatgetriebe nach wenigstens einem der vorherigen Ansprüche, **dadurch gekennzeichnet, dass** dem ersten Betätigungskolben (6) eine erste Rückstellfeder (24) und dem zweiten Betätigungskolben (18) eine zweite Rückstellfeder (25) an deren jeweiligen vom Druckraum (20) des Betätigungszylinders (5) fernen Stirnseite zugeordnet ist, die sich bei Ausbildung des Schaltgliedes (1) als Getriebebremse an einem gehäusefesten Bauteil und bei Ausbildung als Getriebekupplung an einem rotierenden Getriebebauteil abstützen, und bei denen die Rückstellkraft der ersten Feder (24) größer ist als die Rückstellkraft der zweiten Feder (25).

11. Automatgetriebe nach wenigstens einem der vorherigen Ansprüche, **dadurch gekennzeichnet, dass** die Schiebemuffe (19) auf einer Innenverzahnung (23) des Innenlamellenträgers (7) axial verschieblich geführt und über ein Verbindungselement (26) mit dem zweiten Betätigungskolben (18) wirkverbunden und axial verstellbar ist.

12. Automatgetriebe nach wenigstens einem der vorherigen Ansprüche, **dadurch gekennzeichnet, dass** an der radial nach innen weisenden Seite des Außenlamellenträgers (4) ein erster Synchronisierungsbereich (41) ausgebildet ist, und dass an der druckraumfernen Stirnseite des zweiten Betätigungskolbens (27) eine mit dem ersten Synchronisierungsbereich (41) zur Drehzahlsynchronisation zusammenwirkender zweiter Synchronisierungsbereich (28) ausgebildet ist.

13. Automatgetriebe nach wenigstens einem der vorherigen Ansprüche, **dadurch gekennzeichnet, dass** am Außenumfang des ersten Betätigungskolbens (6) eine mit dem zweiten Betätigungskolben (33) wirkverbundene Schiebemuffe (39) axial verschiebbar gelagert ist, wobei der zweite Betätigungskolben (33) radial außerhalb der Schiebemuffe (39) und zusammen mit dieser im gleichen Druckzylinder (5) wie der erste Betätigungskolben (6) angeordnet ist.

14. Automatgetriebe nach Anspruch 13, **dadurch gekennzeichnet, dass** die Schiebemuffe (39) an ihrem Außenumfang eine axial ausgerichtete Außenverzahnung (32) aufweist, auf der ein Synchronring (35) axial verschiebbar aber drehfest angeordnet ist.

15. Automatgetriebe nach wenigstens einem der vorherigen Ansprüche, **dadurch gekennzeichnet, dass** an einem am Innenumfang des Außenlamellenträgers (4) ausgebildeter Synchronisierungsbereich (34) ein axial ausgerichteter Verzahnungsbereich (36) vorhanden ist, in den die Außenverzahnung (32) der Schiebemuffe (39) formschlüssig einspurbar ist.

16. Automatgetriebe nach wenigstens einem der vorherigen Ansprüche, **dadurch gekennzeichnet, dass** am Innenumfang der Schiebemuffe (39) eine Sperrvorrichtung (37) ausgebildet ist, die eine axiale Verschiebung des ersten Betätigungskolbens (6) erst dann ermöglicht, wenn mittels der Synchronisationsvorrichtung (34, 35) Drehzahlgleichheit sowie eine formschlüssige Verbindung zwischen der Schiebmuffe (39) und dem Außenlamellenträger (4) erreicht ist.

17. Automatgetriebe nach wenigstens einem der vorherigen Ansprüche, **dadurch gekennzeichnet, dass** an dem ersten Betätigungskolben (6) ein von dem Druckraum (20) der Kolben-Zylinder-Anordnung (5, 6, 33) axial wegweisenden Vorsprung (41) angeordnet ist, mit dem die Innen-oder Außenlamellen (8, 9) des Schaltglieds (1) mit einer Betätigungskraft F₁ von dem ersten Betätigungskolben (6) beaufschlagbar sind.

18. Automatgetriebe nach wenigstens einem der vorherigen Ansprüche, **dadurch gekennzeichnet, dass** anstelle eines Synchronringes eine zusätzliche kleine hydraulisch oder elektromechanisch betätigbare Lamellenkupplung zwischen dem Lamellenträger und dem drehenden oder gehäusefesten Getriebebauteil angeordnet ist.

19. Automatgetriebe nach wenigstens einem der vorherigen Ansprüche, **dadurch gekennzeichnet, dass** eine hydrodynamische Sperrvorrichtung für den ersten Betätigungskolben (6) vorhanden ist, die dann entsperrt wird, wenn ein Reib- und/oder Formschluss zwischen dem festzulegenden Schaltgliedbauteil und einen gehäusefesten Getriebebauteil vorliegt.

20. Automatgetriebe nach wenigstens einem der vorherigen Ansprüche, **dadurch gekennzeichnet, dass** durch wenigstens einen der beiden Betätigungskolben (18, 27, 33) beziehungsweise durch den zweiten Aktuator (13) ein elektrischer Schalter mechanisch betätigbar ist, mit dem ein Schmiermittelstrom ein- oder ausschaltbar ist.

21. Automatgetriebe nach wenigstens einem der vorherigen Ansprüche 1 bis 20, **dadurch gekennzeichne t, dass** durch einen von dem zweiten Aktuator (13) betätigbarer hydraulischer Schieber ein elektrischer Schalter mechanisch betätigbar ist, mit dem ein Schmiermittelstrom ein- oder ausschaltbar ist.

## Claims

1. Automatic vehicle transmission with at least one hydraulically controllable shifting component (1) which is designed as a transmission brake or transmission clutch and features an inner disk carrier (7) and an outer disk carrier (4) on which inner disks (9) or outer disks (8) are nonrotationally and axially displaceably arranged, with these disks being arranged alternately one after the other forming a disk pack and being controllable by an actuator (16) for closure of the shifting component (1) by means of an axial actuating force (F), and with one disk carrier (4) being connected to nonrotatable or rotatable transmission components and the other disk carrier (7) being connectable to rotatable transmission components (3) via a synchronizing device (2), **characterized in that** the synchronizing device (2) is controllable by a second actuator (13, 18, 27, 33).

2. Automatic transmission according to claim 1, **characterized in that** the synchronizing device (2) comprises a positive-engagement element and/or a nonpositive (frictional) element.

3. Automatic transmission according to claim 2, **characterized in that** the nonpositive (frictional) element constitutes a synchronizer ring (11) with which an active connection can be established with a synchronizing area (12) on one of the two disk carriers (4).

4. Automatic transmission according to at least one of the claims 1 thru 3, **characterized in that** the positive-engagement element constitutes a sliding sleeve (14) which - fixed but axially displaceable - is supported on an external gearing (17) on the rotatable or nonrotable transmission component (3) in such a way that after establishment of synchronous speed between the fixed and the rotatable transmission component (3) it can be slipped onto the synchronizing area (12) of the disk carrier (7) for positive engagement.

5. Automatic transmission according to at least one of the claims 1 thru 4, **characterized in that** the sliding sleeve (14) can be actuated by the second actuator (13).

6. Automatic transmission according to claim 4, **characterized in that** the second actuator (13) constitutes a shift fork of a positioning device which engages with a circumferential groove (38) of the sliding sleeve (14).

7. Automatic transmission according to claim 5, **characterized in that** the second actuator constitutes a second actuating piston (18) which is axially movably guided in a joint actuating cylinder (5) together with a first actuating piston (6) for pressurization of the clutch disks (8, 9).

8. Automatic transmission according to claim 7, **characterized in that** the joint actuating cylinder (5) features a joint pressure chamber (20) for the two actuating pistons (6, 18, 27, 33) or a separate pressure chamber for each actuating piston.

9. Automatic transmission according to claim 8, **characterized in that** the two actuating pistons can be actuated with the same actuating pressure or with different actuating pressures (p_k).

10. Automatic transmission according to at least one of the preceding claims, **characterized in that** the first actuating piston (6) has a first return spring (24) assigned to it on its distant front end in relation to the pressure chamber (20) of the actuating cylinder (5) and the second actuating piston (18) has a second return spring (25) assigned to it on its distant front end in relation to the pressure chamber (20) of the actuating cylinder (5), with these springs being supported on a housing-fixed component if the shifting component (1) is designed as a transmission brake and on a rotating transmission component if the shifting component (1) is designed as a transmission clutch, and with the return force of the first spring (24) being greater than the return force of the second spring (25).

11. Automatic transmission according to at least one of the preceding claims, **characterized in that** the sliding sleeve (19) is axially displaceably guided on an internal gearing (23) of the inner disk carrier (7) und actively connected to the second actuating piston (18) and axially adjustable via a connecting element (26).

12. Automatic transmission according to at least one of the preceding claims, **characterized in that** the radially inward facing side of the external disk carrier (4) features a first synchronizing area (41), and that the pressure-chamber-distant front end of the second actuating piston (27) features a second synchronizing area (28) acting together with the first synchronizing area (41) for speed synchronization .

13. Automatic transmission according to at least one of the preceding claims, **characterized in that** a sliding sleeve (39) is axially displaceably supported on the outer circumference of the first actuating piston (6) and actively connected to the second actuating piston (33), with the second actuating piston (33) being arranged radially outside of the sliding sleeve (39) and together with it in the same pressurized cylinder (5) as the first actuating piston (6).

14. Automatic transmission according to claim 13, **characterized in that** the external circumference of the sliding sleeve (39) features an axially aligned external gearing (32), on which an axially displaceable but rotationally fixed synchronizer ring (35) is arranged.

15. Automatic transmission according to at least one of the preceding claims, **characterized in that** the inner periphery of the external disk carrier (4) features a synchronizing area (34) with an axially aligned toothed section (36) with which the external gearing (32) of the sliding sleeve (39) can positively engage.

16. Automatic transmission according to at least one of the preceding claims, **characterized in that** the inner periphery of the sliding sleeve (39) features a locking device (37) which will permit axial displacement of the first actuating piston (6) only after the synchronizing device (34, 35) has brought about synchronous speed and a postive connection exists between the sliding sleeve (39) and the external disk carrier (4).

17. Automatic transmission according to at least one of the preceding claims, **characterized in that** the first actuating piston (6) features an axially projecting part (41) extending away from the pressure chamber (20) of the piston-cylinder arrangement (5, 6, 33), with which the inner or outer disks (8, 9) of the shifting component (1) can be actuated with an actuating force F1 of the first actuating piston (6).

18. Automatic transmission according to at least one of the preceding claims, **characterized in that** in place of a synchronizer ring there is an additional small hydraulically or electromechanically controllable multidisk clutch arranged between the disk carrier and the rotating or the housing-fixed transmission component.

19. Automatic transmission according to at least one of the preceding claims, **characterized in that** a hydrodynamic locking device is available for the first actuating piston (6), which is unlocked if frictional and/or positive engagement exists between the shifting component and a housing-fixed transmission component.

20. Automatic transmission according to at least one of the preceding claims, **characterized in that** by means of at least one of the two actuating pistons (18, 27, 33) or by means of the second actuator (13) an electric switch can be mechanically actuated to activate or deactivate a lubricant flow.

21. Automatic transmission according to at least one of the preceding claims 1 thru 20, **characterized in that** by means of a hydraulic valve, which is controlled by the second actuator (13), an electric switch is mechanically controllable for activation or deactivation of a lubricant flow.

## Revendications

1. Transmission automatique pour un véhicule, dotée d'au moins un élément de changement de rapport (1) qui peut être actionné hydrauliquement et qui est réalisé comme frein de boîte ou embrayage de boîte, cet élément étant doté d'un porte-disques intérieurs (7) et d'un porte-disques extérieurs (4), sur lesquels sont disposés de façon solidaire en rotation et axialement deplaçable des disques intérieurs (9) ou des disques extérieurs (8), ceux-ci étant disposés en alternance l'un derrière l'autre et formant un ensemble de disques et pouvant être sollicités à l'aide d'un actionneur (16) pour la fermeture de l'élément de changement de rapport (1) avec une force d'actionnement axiale (F₁), et sur laquelle un porte-disques (4) peut être lié à des composants de la boîte de vitesses non-rotatifs ou rotatifs et l'autre porte-disques (7) peut être lié par l'intermédiaire d'un dispositif de synchronisation (2) à des composants rotatifs de la boîte de vitesses (3), **caractérisée en ce que** le dispositif de synchronisation (2) peut être actionné à l'aide d'un deuxième actionneur (13, 18, 27, 33).

2. Transmission automatique selon la revendication 1, **caractérisée en ce que** le dispositif de synchronisation (2) comprend un élément garantissant une liaison de forme et/ou un élément garantissant une liaison de force.

3. Transmission automatique selon la revendication 2, **caractérisée en ce que** l'élément garantissant la liaison de force est réalisé comme cône de synchronisation (11), celui-ci pouvant être lié activement avec une partie de synchronisation (12) à un des deux porte-disques (4).

4. Transmission automatique selon au moins une des revendications 1 à 3, **caractérisée en ce que** l'élément garantissant la liaison de forme est réalisé comme manchon coulissant (14), celui-ci étant logé sans possibilité de rotation, mais axialement déplaçable, sur une denture extérieure (17) sur le composant de la boîte de vitesses (3) rotatif ou non-rotatif et de telle manière qu'il peut être monté - après l'égalisation de la vitesse de rotation du composant fixe et du composant orientable (3) - par engagement positif sur la partie de synchronisation (12) du porte-disques (7).

5. Transmission automatique selon au moins une des revendications 1 à 4, **caractérisée en ce que** le manchon coulissant (14) peut être actionné par le deuxième actionneur (13).

6. Transmission automatique selon la revendication 4, **caractérisée en ce que** le deuxième actionneur (13) est réalisé comme fourchette de commande d'un dispositif de réglage engrenant dans la rainure périphérique (38) du manchon coulissant (14).

7. Transmission automatique selon la revendication 5, **caractérisée en ce que** le deuxième actionneur est réalisé comme un deuxième piston d'actionnement (18), celui-ci étant, conjointement avec un premier piston d'actionnement (6) utilisé pour la pressurisation des disques de l'embrayage (8, 9), guidé de façon axialement mobile dans un piston d'actionnement commun (5).

8. Transmission automatique selon la revendication 7, **caractérisée en ce que** dans le piston d'actionnement commun (5) est réalisé une chambre de pression commune (20) pour les deux pistons d'actionnement (6, 18, 27, 33) ou respectivement une chambre de pression séparée pour chacun des deux pistons d'actionnement.

9. Transmission automatique selon la revendication 8, **caractérisée en ce que** les deux pistons d'actionnement peuvent être pressurisés avec les mêmes pressions d'actionnement ou avec des pressions d'actionnement différentes (p_k).

10. Transmission automatique selon au moins une des revendications précédentes, **caractérisée en ce que** au premier piston d'actionnement (6) est associé un premier ressort de rappel (24) et au deuxième piston d'actionnement (18) est associé un deuxième ressort de rappel (25) et cela respectivement du côté frontal éloigné de la chambre de pression (20) du piston d'actionnement (5), ceux-ci appuyant - lorsque l'élément de changement de rapport (1) est réalisé comme frein de boîte - sur un élément fixé au carter de la boîte de vitesses, et - lorsque l'élément de changement de rapport est réalisé comme embrayage de boîte de vitesses - sur un élément rotatif de la boîte de vitesses, et sur lesquels la force de rappel du premier ressort (24) est supérieure à la force de rappel du deuxième ressort (25).

11. Transmission automatique selon au moins une des revendications précédentes, **caractérisée en ce que** le manchon coulissant (19) est guidé de façon déplaçable axialement sur une denture intérieure (23) du porte-disques intérieurs (7) et **en ce qu'**il est lié activement par l'intermédiaire d'un élément de liaison (26) au deuxième piston d'actionnement (18) tout en pouvant être déplacé axialement.

12. Transmission automatique selon au moins une des revendications précédentes, **caractérisée en ce que** sur le côté dirigé radialement vers l'intérieur du porte-disques extérieurs (4) est réalisé une première partie de synchronisation (41), et **en ce que** sur le côté frontal du piston d'actionnement (27) éloigné de la chambre de pression est réalisée une deuxième partie de synchronisation (28) coopérant avec la première partie de synchronisation (41) pour la synchronisation de la vitesse de rotation.

13. Transmission automatique selon au moins une des revendications précédentes, **caractérisée en ce que** sur le pourtour extérieur du premier piston d'actionnement (6) est logé de façon axialement déplaçable un manchon coulissant (39) lié activement au deuxième piston d'actionnement (33), sachant que le deuxième piston d'actionnement (33) est disposé radialement à l'extérieur du manchon coulissant (39) et conjointement avec celui-ci dans le même vérin pneumatique (5) dans lequel est disposé le premier piston d'actionnement (6).

14. Transmission automatique selon la revendication 13, **caractérisée en ce que** le manchon coulissant (39) comporte sur son pourtour extérieur une denture extérieure (32) orientée axialement, sur laquelle est disposé un cône de synchronisation (35) de façon déplaçable axialement, mais fixe en rotation.

15. Transmission automatique selon au moins une des revendications précédentes, **caractérisée en ce que** au niveau d'une partie de synchronisation (34) réalisée sur le pourtour intérieur du porte-disques extérieurs (4) est présente une zone de denture (36) orientée axialement, dans laquelle la denture extérieure (32) du manchon coulissant (39) peut être engagée positivement.

16. Transmission automatique selon au moins une des revendications précédentes, **caractérisée en ce que** sur le pourtour intérieur du manchon coulissant (39) est réalisé un dispositif de verrouillage (37), celui-ci permettant un déplacement axiale du premier piston d'actionnement (6) seulement quand, à l'aide du dispositif de synchronisation (34, 35), a été atteinte l'égalisation de la vitesse de rotation ainsi qu'une liaison de forme entre le manchon coulissant (39) et le porte-disques extérieurs (4).

17. Transmission automatique selon au moins une des revendications précédentes, **caractérisée en ce que** sur le premier piston d'actionnement (6) est disposé un tenon (41) dirigé axialement dans le sens opposé à la chambre de pression (20) de l'ensemble piston-vérin (5, 6, 33), celui-ci permettant de solliciter les disques intérieurs ou extérieurs (8, 9) de l'élément de changement de rapport (1) avec une force d'actionnement F1 provenant du premier piston d'actionnement (6).

18. Transmission automatique selon au moins une des revendications précédentes, **caractérisée en ce que** entre le porte-disques et l'élément rotatif ou fixé au carter de la boîte de vitesses est disposé un embrayage à disques supplémentaire à commande hydraulique ou électromécanique au lieu d'un cône de synchronisation.

19. Transmission automatique selon au moins une des revendications précédentes, caratérisée en ce que est présent un dispositif de verrouillage hydrodynamique pour le premier piston d'actionnement (6), celui-ci étant déverrouillé lorsqu'il y a fermeture par frottement et/ou fermeture mécanique entre l'élément de changement de rapport à définir et un élément fixé au carter de la boîte de vitesses.

20. Transmission automatique selon au moins une des revendications précédentes, **caractérisée en ce que** il est possible d'actionner mécaniquement un contacteur électrique à l'aide d'au moins un des deux pistons d'actionnement (18, 27, 33) ou par le deuxième actionneur (13), ce contacteur permettant d'établir ou de couper un flux de lubrifiant.

21. Transmission automatique selon au moins une des revendications précédentes 1 à 20, **caractérisée en ce que** à l'aide d'un coulisseau hydraulique qui peut être actionné par un deuxième actionneur (13) il est possible d'actionner mécaniquement un contacteur électrique, celui-ci permettant d'établir ou de couper un flux de lubrifiant.
